# EUROPEAN PATENT SPECIFICATION

(11) **EP 1 678 071 B1**
(45) Date of publication and mention of the grant of the patent: **04.04.2007**
(21) Application number: 04791741.4
(22) Date of filing: 22.10.2004
(51) Int. Cl.: B67D 1/04, F16L 37/127

(54) **ALCOHOLIC BEVERAGE DISPENSING APPLIANCE WITH GAS CONNECTION**
GERÄT MIT GASANSCHLUSS ZUR ABGABE EINES ALKOHOLISCHEN GETRÄNKES
APPAREIL DISTRIBUTEUR DE BOISSONS ALCOOLISEES A RACCORD A GAZ

(30) Priority: 24.10.2003 GB 0324905
(43) Date of publication of application: 12.07.2006
(73) Proprietor: InBev S.A., 3000 Leuven (BE)
(72) Inventor: GRIMWADE, Stephen J., Huntingdon, Cambs PE26 2QQ (GB); HALKET, Andrew R. B., Cherry Hinton, Cambridge CB1 9GG (GB)
(74) Representative: Gevers, François
(86) International application number: PCT/IB2004/003476
(87) International publication number: WO 2005/040035

(56) References cited:
- WO-A1-01/94250
- US-A- 2 191 579
- US-A- 4 850 387

## Description

### Field of the Invention

The present invention relates to an alcohol beverage dispensing appliance and, in particular, relates to a gas connection to a tap adapter mounted within the appliance.

### Background of the Invention

It is known to contain alcohol, such as wine, in bags contained in a cardboard type container where the wine feeds by gravity through a shut off tap mounted outside the container. Further, it is known to fill a bag with beer in a keg housed in a beverage dispensing appliance. In the case of a beer keg, gas pressure is applied to the bag to dispense the beer from the bag and out of the keg. Further, the bag is inserted into the keg container prior to the beer being filled into the bag through a valve assembly. A tap adapter is connected to the keg for dispensing the beer from the keg. The tap adapter is connected to a valve assembly that permits dispensing of the beverage and gas pressurization of the bag within the container. Because the keg and the tap adapter are removable parts from the appliance, it is necessary to provide a gas connection from the appliance to the tap adapter that may be readily connected and disconnected by a consumer.

An appliance according to the preamble of claim 1 is known from US-A-4 850 387.

### Summary of the Invention

The present invention relates to a gas connection between an alcohol beverage dispensing appliance and a tap adapter which may be connected and disconnected by a consumer.

The alcohol beverage dispensing appliance has a beverage container housed in the appliance. Preferably this beverage container is a beer keg. A tap adapter is mounted to the container for dispensing the beverage from the container. The tap adapter has a first gas connector and a gas line adapted for connection with the container for charging the container with pressurized gas to facilitate beverage dispensing. The tap adapter has at least one gas connecting locating member. The appliance includes a gas supply line housed in the container having a second gas connector adapted for sealing engagement with the first gas connector. The appliance has a guideway for locating the second gas connector therein and adapted for receiving the gas connecting locating member of the tap adapter in sliding in guiding relationship therewith to permit movement of the first gas connector into sealing relation with the second gas connector. The appliance further includes a locking member moveable in the guideway between an unlocked position permitting movement of the locating member along the guideway and a locked position engaging the locating member to prevent reversing movement of the locating member out of the guideway.

Preferably the locking member includes a lever arm pivotally attached to the appliance adjacent the guideway. The lever arm supports a first locking finger extending into the guideway and moveable between the unlocked position and the locked position to engage the locating member. Further, the lever has a second finger. As the lever is moved into an unlocked position, the second finger rotates to push the gas connecting locating member rearwardly out of the guideway and thereby disconnect the first and second gas connectors.

Preferably, the lever is in a depressed position extending adjacent to the tap adapter when in the locked position. Preferably, the lever in the depressed position permits the appliance doors to close thereby confirming to the consumer that the air connection has been properly made.

### Brief Description of the Drawings

For a better understanding of the nature and objects of the present invention reference may be had to the accompanying diagrammatic drawings in which:
Figure 1 is a front elevation view of a home beer dispensing appliance in accordance with the present invention;
Figure 2 is a side elevation view of the home beer dispensing appliance;
Figure 3 is a sectional side view of the tap adapter mounted to the keg inside the dispensing appliance;
Figure 4 is an exploded view of the gas connection to the tap adapter of the present invention;
Figure 5 is a side view showing the locking member of the present invention in an unlocked position; and,
Figure 6 is a side view of the locking member of the present invention in the locked position.

### Detailed Description of the Invention

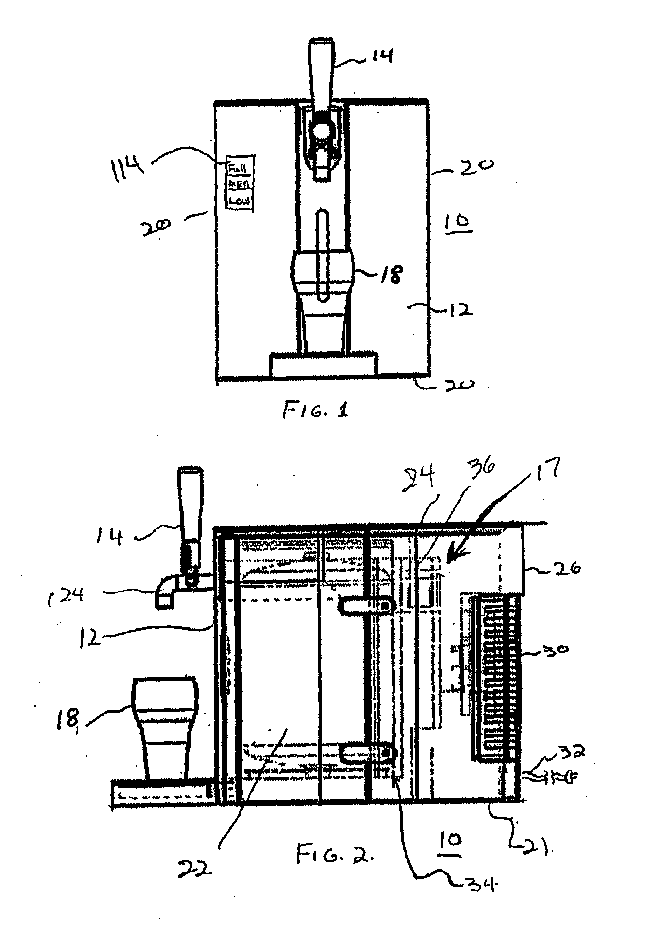

Referring to Figures 1 and 2 there is shown a home beer dispensing appliance 10. The dispensing appliance 10 is primarily intended for use in domestic kitchens but may also be used in utility rooms, garages, domestic bars, caravans etc. While the preferred embodiment relates to dispensing beer, alternatively carbonated solutions or other alcohol beverages may be dispensed by appliance 10.

The home beer dispensing appliance 10 has a front wall 12 and a dispensing tap 14 protruding forward of the front wall 12. A drip tray 16 also protrudes forward of the front wall 12 and is adapted to support an open glass container 18 below the dispensing tap 14. The home beer dispensing appliance 10 further has a base 21 adapted to rest on a counter top. The front wall 12 is an extension of two pivoting side walls or doors 20 which may be moved between closed and open positions to allow the keg container 22 (see Figure 2 in broken lines) to be inserted into the housing 17 of the home beer dispensing appliance 10.

The housing 17 of the home beer dispensing appliance 10 further includes a top wall 24 and a rear wall 26. The rear wall 26 has a grill 30 that permits for air circulation within the home beer dispensing appliance 10. An electrical cord 32 extends through the rear wall 26 of the appliance 10 to provide a connection into a main electrical supply to supply electrical power to the electrical components housed within the appliance 10. Alternatively, a 12 Volt DC supply input may be used.

The dispensing appliance 10 has a cooling system 34 located behind and below keg 22 that is adapted to cool beer in keg 22 when keg 22 is placed into the dispensing appliance 10.

The appliance 10 further has an air pump 36 which is utilized to supply a pressurized gas, preferably air, to the keg container 22.

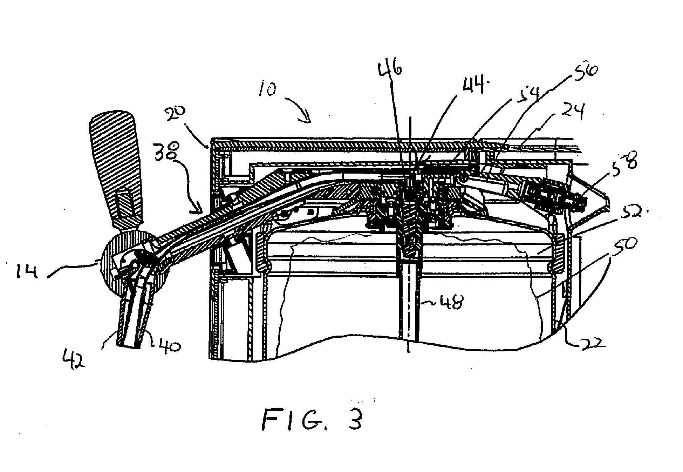

Referring to Figure 3, the appliance 10 has a tap adapter 38. The tap adapter 38 carries the tap 14 which permits beverage to be dispensed through tube 40 and out the spout 42. Tube 40 extends through the internal part of tap adapter 38 for connection with valve system 44. The valve system 44 includes a central valve 46 which is attached through to a spear 48. Spear 48 extends into the bag 50 located in the keg container 22. The spear 48 extends toward the bottom of the container 22 and the bag so as to draw beverage from the bottom portion (not shown) of the bag 50 out through the central valve 46 along tube 40 and out spout 42 when tap 14 is in the open position.

Between the bag 50 and the interior wall of the keg container 22 is an air space 52. Air space 52 is typically maintained under air pressure so as to place pressure on the bag 50 to push the beverage up the spear 48 and out through the tap adapter 38. Air pressure is introduced into the air space 52 through air valve 54 of valve system 44. The tap adapter 38 has a gas or air line 56 which is connected to an appliance gas line 58. Gas line 58 is connected to air pump 36 (Figure 2).

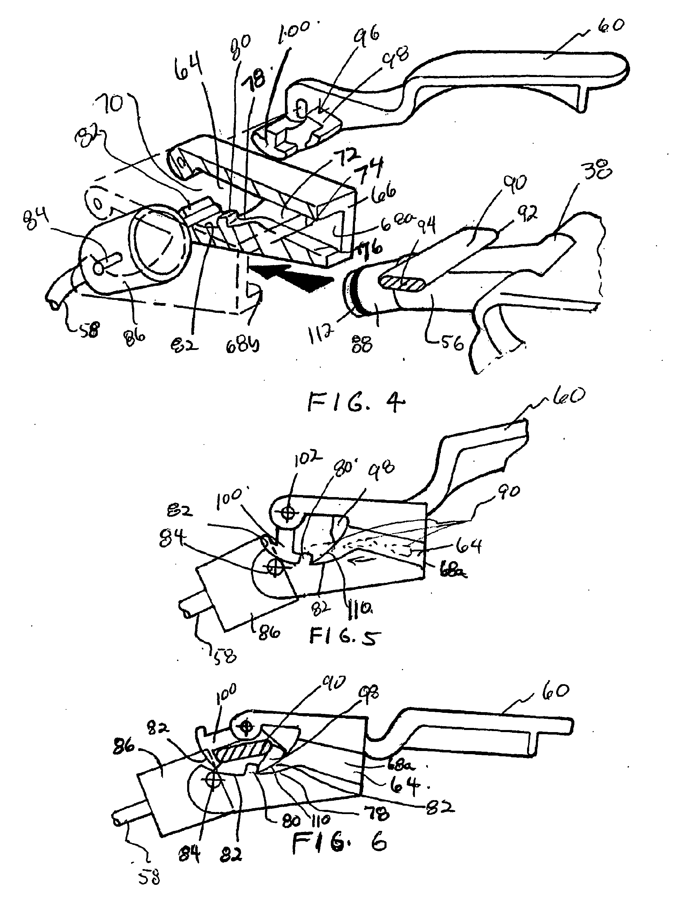

The adapter 38 is connected to the valve system 44 of the container 22 and to the appliance air line supply at 58 so as to permit the doors 20 of the appliance 10 to be closed as shown in Figure 3. The appliance 10 further includes a lever 60 (see Figures 4 through 6) which is depressed adjacent the tap adapter 38 to permit the doors 20 to be closed.

Referring to Figures 4 to 6, the component parts are shown for making the air connection between the air line supply 56 of the adapter 38 and the air supply line 58 of the appliance 10. In Figure 4, an exploded view of the air line connection component parts is shown with the connection not having been made. Figure 5 shows a side elevational view of the air line connection component parts without the adapter 38 having been connected to the air line supply 58 of the appliance 10. Figure 6 shows a side elevational view of the air line connection component parts wherein the adapter 38 has been connected with the air line supply 58 of the appliance 10.

The appliance 10 includes a guideway 64 shown as a generally U-shaped bracket 66 in Figure 4 having two U-shaped tracks 68a and 68b. The track 68b shown in broken lines is similar to track 68a shown in solid view except for the opening 70 shown in track 68a is not present in track 68b. The tracks 68a and 68b of the guideway 64 include a first entry track portion 72 which comprises two opposing walls 74 and 76 having a relatively constant spaced apart distance. The lower wall 76 diverges downwardly at curved wall 78 as lower wall 76 extends inwardly. This curved wall 78 extends to a stop 80 which protrudes into the track and then is followed downstream by a curving wall 82. Curved walls 78 and 82 provide sliding, guiding, and bearing surfaces for the lever 60.

The appliance air supply line 58 terminates in a female connecting member 86. Female connecting member 86 has a shut off valve (not shown) that closes air supply line 58 when there is no connection to the female connecting member 86. The connecting member 86 is adapted to receive male connecting member 88 of the adapter 38. The male connecting member 88 matingly and sealingly engages with the female connecting member 86 to open the shut off valve and permit air flow through the adapter 38. The adapter 38 further has a cross bar gas connecting locating member 90 which has two opposing end portions 92 and 94 that are adapted to be received in the tracks 68a and 68b, respectively of the appliance guideway 64.

Lever arm 60 has a locking member 96 in the form of a first locking finger 98 and a second finger 100. The locking fingers 98 and 100 are adapted to pass through the opening 70 in the bracket 66. Fingers 98 and 100 slide respectively over curved walls 78 and 82. The lever arm 60 is mounted by shaft 102 to the bracket 64 so as to be rotatable and pivotable about pivot the point of the shaft 102. In Figure 5, the lever 60 is shown in a raised open position and in Figure 6 the lever 60 is shown in a depressed position which is also the locking position.

During the connection of the male gas connector 88 into the female gas connector 86, the adapter 38 is moved so that the locating member 90 extends into the tracks 68a and 68b and follows track 68a substantially as shown by the broken line versions of locating member 90 shown in Figure 5. Eventually, as the locating member 90 is moved inwardly along the guideway 64, the locating member 90 passes through the space between the locking finger 98 and the second finger 90 of the lever 60. At this time, the lever 60 can be depressed into the position shown in Figure 6 and the locking finger 98 comes into engagement with the locking member 90. This also results in the finger 100 being rotated along the curved guide wall 82 of the guideway 64 to receive a portion of the locating member 90. The rotation of the lever 90 in the downward position to lock the locating member 90 in place is limited by stop 80 engaging locking finger 98. Further, movement of locking finger 98 follows along a guide surface 110 of the curved wall 78. During this locking of the locating member 90 in place, the connector 88 matingly engages with connector 86 thereby providing an air supply from air line 58 of the appliance 10 to air line 56 of the adapter 38. An O-ring seal 112 (Figure 4) on the connector 88 is adapted to sealingly engage the connectors 86 and 88.

To disconnect the connectors 86 and 88, lever arm 60 is raised by the consumer into the position shown in Figure 5. As a result, the finger member 100 of the lever 60 is rotated along guide surface 82 in a counter clockwise direction until it comes into contact with stop member 80. Finger member 100 effectively pushes the locating member or locating bar 90 out of the locked position and allows the locating bar 90 to be moved backwards or in a reverse direction along the track 68a.

## Claims

1. An alcohol beverage dispensing appliance (10) comprising:
a beverage container (22);
a tap adapter (38) for carrying a tap and being suitable to be mounted to the container for dispensing the beverage from the container, the tap adapter comprising a first gas connector (88) and a gas line (56) adapted for connection with the container for charging the container with pressurized gas to facilitate beverage dispensing, and the tap adapter comprising at least one gas connecting locating member (90) fixed thereto;
**characterised in that** said beverage container is housed in the appliance; and that the alcohol beverage dispensing appliance further comprises a gas supply line (58) housed in the container and comprising a second gas connector (86) adapted for sealing engagement with the first gas connector;
a guideway (64) for locating the second gas connector therein and adapted for receiving the gas connecting locating member of the tap adapter in sliding and guiding relation to permit movement of the first gas connector into sealing relation with the second gas connector; and,
a locking member (96) moveable in the guideway (64) between an unlocked position for moving the gas connecting locating member along the guideway and a locked position engaging the gas connecting locating member preventing reversing movement of the gas connecting locating member out of the guideway.

2. The appliance of claim 1 wherein the first gas connector is a male connector and the second gas connector is a female connector and the first and second gas connectors matingly sealingly engage.

3. The appliance of claim 1 wherein the locking member includes a lever arm (60) pivotally attached to the appliance adjacent the guideway, the lever arm supporting a first locking finger (98) extending into the guideway and moveable between the unlocked position and the locked position to engage the gas connecting locating member.

4. The appliance of claim 3 wherein the lever arm further includes a second finger (100) rotatable in the guideway, the second finger being spaced from the first locking finger whereby the gas connecting locating member passes between the first and second fingers and is locked therebetween as the first and second fingers are rotated in the guideway.

5. The appliance of claim 1 wherein the guideway includes a stop (80) limiting rotation of the first locking finger as the first locating finger is moved into the locked position and limiting rotation of the second finger as the second finger is moved into the unlocked position.

6. The appliance of claim 3 further including appliance doors (20) that are closeable once the lever arm is moved into the locked position.

7. The appliance of claim 1 wherein the guideway comprises a pair of spaced apart tracks (68a, 68b) and the gas connecting locating member comprises a bar having opposing end portions moveable along the spaced apart tracks.

8. The appliance of claim 1 wherein the second gas connector is pivotally mounted in the guideway.

9. The appliance of claim 4 wherein the lever arm is depressed towards the tap adapter to move the first locking finger into the locked position and the lever arm is raised to move the second finger against the gas connecting locating member to disconnect the first gas connector from the second gas connector.

## Patentansprüche

1. Gerät (10) zur Abgabe eines alkoholischen Getränks, umfassend:
einen Getränkebehälter (22),
einen Zapfhahnadapter (38) zum Tragen eines Zapfhahns, wobei der Adapter geeignet ist, an dem Container angebracht zu werden, um das Getränk aus dem Container abzugeben, wobei der Zapfhahnadapter einen ersten Gasanschluss (88) und eine Gasleitung (56), welche zum Verbinden mit dem Container zum Befüllen des Containers mit Druckgas ausgelegt ist, um die Getränkeabgabe zu erleichtern, umfasst, wobei der Zapfhahnadapter zumindest ein hieran angebrachtes Gasanschlusslokalisierungselement (90) umfasst,
**dadurch gekennzeichnet, dass** der Getränkebehälter in dem Gerät beherbergt ist, und dass das Gerät zum Abgeben eines alkoholischen Getränks weiterhin eine Gasversorgungsleitung (58), welche in dem Container beherbergt ist, und einen zweiten Gasanschluss (86), welcher zum abgedichteten in-Eingriffbringen mit dem ersten Gasanschluss ausgelegt ist,
einen Führungsweg (64) zum Lokalisieren der zweiten Gasanschluss in sich, welcher ausgelegt ist, das Gasanschlusslokalisierungselement des Zapfhahnadapters in gleitender und führender Beziehung aufzunehmen, um eine Bewegung des ersten Gasanschlusses in eine abgedichtete Beziehung mit dem zweiten Gasanschluss zu gestatten, und
ein in dem Führungsweg (64) zwischen einer entriegelten Position zum Bewegen des Gasanschlusslokalisierungselements entlang des Führungsweges und einer verriegelten Position, welche das Gasanschlusslokalisierungselement in Eingriff bringt, womit eine umgekehrte Bewegung des Gasanschlusslokalisierungselements aus dem Führungsweg heraus verhindert wird, bewegliches Verriegelungselement (96) umfasst.

2. Gerät nach Anspruch 1, wobei der erste Gasanschluss ein männliches Verbindungselement und der zweite Gasanschluss ein weibliches Verbindungselement ist, und der erste und der zweite Gasanschluss zusammenwirkend abdichtend in Eingriff gelangen.

3. Gerät nach Anspruch 1, wobei das Verriegelungselement einen schwenkbar nahe dem Führungsweg an dem Gerät angebrachten Hebelarm (60) umfasst, wobei der Hebelarm einen ersten Verriegelungsfinger (98) trägt, welcher sich in den Führungsweg erstreckt und welcher zwischen der entriegelten Position und der verriegelten Position bewegbar ist, um mit dem Gasanschlusslokalisierungselement in Eingriff zu gelangen.

4. Gerät nach Anspruch 3, wobei der Hebelarm weiterhin einen in dem Führungsweg drehbaren zweiten Finger (100) umfasst, wobei der zweite Finger von dem ersten verriegelnden Finger beabstandet ist, wobei das Gasanschlusslokalisierungselement zwischen dem ersten und zweiten Finger hindurchgeht und dazwischen verriegelt wird, wenn der erste und zweite Finger in dem Führungsweg gedreht werden.

5. Gerät nach Anspruch 1, wobei der Führungsweg einen Anschlag (80) umfasst, welcher die Drehung des ersten verriegelnden Fingers begrenzt, wenn der erste lokalisierende Finger in die verriegelte Position bewegt wird, und die Drehung des zweiten Finger begrenzt, wenn der zweite Finger in die entriegelte Position bewegt wird.

6. Gerät nach Anspruch 3, weiterhin umfassend Gerätetüren (20), welche schließbar sind, sobald der Hebelarm in die verriegelte Position bewegt ist.

7. Gerät nach Anspruch 1, wobei der Führungsweg ein Paar von zueinander beabstandeten Schienen (68a, 68b) umfasst und das Gasanschlusslokalisierungselement eine Stange mit gegenüberliegenden Endabschnitten, welche entlang der zueinander beabstandeten Schienen bewegbar sind, umfasst.

8. Gerät nach Anspruch 1, wobei der zweite Gasanschluss schwenkbar in dem Führungsweg angebracht ist.

9. Gerät nach Anspruch 4, wobei der Hebelarm zu dem Zapfhahnadapter hin herunter gedrückt wird, um den ersten verriegelnden Finger in die verriegelte Position zu bewegen, und der Hebelarm angehoben wird, um den zweiten Finger gegen das Gasanschlusslokalisierungselement zu bewegen, um den ersten Gasanschluss von dem zweiten Gasanschluss zu lösen.

## Revendications

1. Appareil de distribution de boissons alcoolisées (10), comprenant :
un récipient à boisson (22),
un adaptateur de robinet (38) destiné à porter un robinet et pouvant être monté sur le récipient pour la distribution de la boisson depuis le récipient, l'adaptateur de robinet comprenant un premier raccord de gaz (88) et une ligne de gaz (56) adaptée pour le raccordement au récipient afin de pressuriser le récipient au moyen de gaz comprimé pour faciliter la distribution de la boisson, et l'adaptateur de robinet comprenant au moins un membre de positionnement de raccordement de gaz (90) fixé sur lui,
**caractérisé en ce que** ledit récipient à boisson est logé dans l'appareil et que l'appareil de distribution de boisson alcoolisée comprend en outre une ligne d'amenée de gaz (58) logée dans le récipient et comprenant un deuxième raccord de gaz (86) adapté pour assurer l'étanchéité de l'engagement avec le premier raccord de gaz,
un guidage (64) dans lequel se positionne le deuxième raccord de gaz et qui est adapté pour recevoir le membre de positionnement du raccordement de gaz de l'adaptateur de robinet dans une relation de glissement et de guidage de manière à permettre le déplacement du premier raccord de gaz dans une relation d'étanchéité avec le deuxième raccord de gaz, et
un membre de verrouillage (96) mobile dans le guidage (64) entre une position déverrouillée pour le déplacement du membre de positionnement du raccordement de gaz le long du guidage et une position verrouillée engageant le membre de positionnement du raccordement de gaz, empêchant une inversion du mouvement du membre de positionnement du raccordement de gaz le faisant sortir du guidage.

2. Appareil suivant la revendication 1, dans lequel le premier raccord de gaz est un raccord mâle et le deuxième raccord de gaz est un raccord femelle, et les premier et deuxième raccords de gaz s'engagent en conjugaison de manière étanche.

3. Appareil suivant la revendication 1, dans lequel le membre de verrouillage comprend un bras de levier (60) fixé de manière pivotante à l'appareil à proximité du guidage, le bras de levier supportant un premier doigt de verrouillage (98) s'étendant dans le guidage et pouvant se déplacer entre la position déverrouillée et la position verrouillée pour entrer en prise avec le membre de positionnement du raccordement de gaz.

4. Appareil suivant la revendication 3, dans lequel le bras de levier comprend en outre un deuxième doigt (100) rotatif dans le guidage, le deuxième doigt étant distant du premier doigt de verrouillage, où le membre de positionnement du raccordement de gaz passe entre les premier et deuxième doigt et est verrouillé entre eux lorsque les premier et deuxième doigts pivotent dans le guidage.

5. Appareil suivant la revendication 1, dans lequel le guidage comprend un arrêt (80) limitant la rotation du premier doigt de verrouillage lorsque le premier doigt de positionnement est mis dans la position verrouillée et limitant la rotation du deuxième doigt lorsque le deuxième doigt est mis dans la position déverrouillée.

6. Appareil suivant la revendication 3, comprenant en outre des portes d'appareil (20) qui peuvent être fermées lorsque le bras de levier est mis en position verrouillée.

7. Appareil suivant la revendication 1, dans lequel le guidage comprend une paire de rails séparés (68a, 68b) et le membre de positionnement du raccordement de gaz comprend une barre ayant des parties terminales opposées pouvant se déplacer le long des rails séparés.

8. Appareil suivant la revendication 1, dans lequel le deuxième raccord de gaz est monté de manière pivotante dans le guidage.

9. Appareil suivant la revendication 4, dans lequel le bras de levier est abaissé vers l'adaptateur de robinet pour mettre le premier doigt dans la position verrouillée et le bras de levier est relevé pour mettre le deuxième doigt contre le membre de positionnement du raccordement de gaz afin de déconnecter le premier raccord de gaz du deuxième raccord de gaz.
